# FASCICULE DE BREVET EUROPEEN

(11) **EP 1 680 258 B1**
(45) Date de publication et mention de la délivrance du brevet: **06.06.2007**
(21) Numéro de dépôt: 04805801.0
(22) Date de dépôt: 03.11.2004
(51) Int. Cl.: B23Q 11/00, B23Q 3/157

(54) **DISPOSITIF D'ASPIRATION ASSOCIE A L'OUTIL D'UNE MACHINE-OUTIL D'USINAGE**
DEM WERKZEUG EINER SCHNEIDWERKZEUGMASCHINE ZUGEORDNETE SAUGVORRICHTUNG
SUCTION DEVICE ASSOCIATED WITH THE TOOL OF A CUTTING MACHINE TOOL

(30) Priorité: 05.11.2003 FR 0312985
(43) Date de publication de la demande: 19.07.2006
(73) Titulaire: COMAU SYSTEMES FRANCE, 78191 Trappes (FR)
(72) Inventeur: AZEMA, André, F-81710 Saix (FR)
(74) Mandataire: Thurgood, Alexander John
(86) Numéro de dépôt international: PCT/FR2004/050558
(87) Numéro de publication internationale: WO 2005/044510

(56) Documents cités:
- EP-A- 0 955 125
- US-A- 5 791 842
- US-A- 5 947 661

## Description

### DOMAINE D'APPLICATION DE L'INVENTION

La présente invention a trait au domaine de l'usinage et notamment aux adaptations permettant d'évacuer dans les meilleures conditions les copeaux produits par l'opération d'usinage.

### DESCRIPTION DE L'ART ANTÉRIEUR

L'évacuation des copeaux produits par l'opération d'usinage est un souci constant des concepteurs de machines-outils d'usinage.

Or, l'évolution des normes environnementales incite les concepteurs de machines-outils d'usinage à limiter l'utilisation de fluides de lubrification, évacuation ou refroidissement.

Une des techniques de lubrification consiste à remplacer la classique projection d'un liquide de coupe par une micro-pulvérisation de liquide au moyen de conduits ménagés dans l'outil lui-même. Comme cette technique ne permet pas l'évacuation des copeaux, il est prévu de l'associer à un module d'aspiration.

Il a été établi que dans le cadre d'une application à une micro-pulvérisation, il était particulièrement important de réaliser l'aspiration au plus près de la zone de création de copeaux c'est à dire d'utiliser des dispositifs d'aspiration embarqués avec l'outil, permettant l'évacuation des effluents créées au fur et à mesure de leur production.

Un de ces dispositifs d'aspiration embarqués est décrit dans le document américain n° US 5 791 842 qui propose un dispositif d'aspiration et d'enlèvement des copeaux pour une machine-outil comportant une structure de changement automatique d'outil, conformément au préambule de la revendication 1. Ce dispositif d'aspiration des copeaux produits par une machine-outil d'usinage au moyen d'au moins un outil mis en mouvement par un module porte-outil, est du type de celui comprenant une centrale d'aspiration créant une dépression, l'outil étant composé d'une partie coupante et d'un support d'attachement. Ce dispositif comporte une buse d'aspiration qui reliée à la centrale d'aspiration vient se fixer
- d'une part par une liaison pivot au support d'attachement standard de l'outil de façon à créer un dépression autour de l'outil jusqu'à son extrémité tout en autorisant la rotation ce dernier,
- d'autre part de façon fixe au module porte-outil.

La buse est constituée sur sa partie arrière d'un manchon venant se placer concentriquement à l'axe de rotation de l'outil sur son support d'attachement standard au moyen de la liaison pivot. La buse est ménagée intérieurement de façon à accueillir la bague extérieure d'un roulement assurant la liaison pivot entre la buse et le support d'attachement standard de l'outil et dont la bague intérieure est fixée sur une surface prévue à cet effet sur le support d'attachement de l'outil. Le roulement est emmanché sur la partie avant du support d'attachement d'outil qui est préformée d'une surface cylindrique, d'un épaulement et d'un filetage pour assurer la mise en position et le maintien en position dudit roulement. Ladite buse solidaire de l'outil vient se relier avec ce dernier, au module de mise en mouvement de l'outil qui comporte un moyen d'accueil d'une partie de la buse ayant pour fonction de la lier à la centrale d'aspiration. Ladite buse solidaire de l'outil est mise en place sur le module porte-outil lors du mouvement relatif de l'outil par rapport au module porte-outil correspondant à celui connu pour la prise de l'outil dans ledit module porte-outil sans actionneur supplémentaire. Ladite buse comprend une extrémité de conduit venant coopérer, une fois l'outil mis en place dans son module de mise en mouvement, avec une extrémité de conduit liée au moyen de mise en position et de maintien en position. Le module porte-outil qui accueille également la buse est équipé d'un adaptateur commun fixe qui se place en vis-à-vis d'un adaptateur embarqué correspondant de la buse lors de la prise de l'outil par le module porte-outil, cet adaptateur fixe étant équipé de l'extrémité du conduit destiné à se connecter à la centrale d'aspiration. Dans le dispositif proposé par ce document, le positionnement de la buse par rapport à l'outil est donc réalisé par la liaison pivot mise en oeuvre par des roulements.

Un autre dispositif est proposé dans le document européen n° EP 0 955 125 qui décrit un outil de coupe pour machine-outil telle une fraise, qui comprend un corps d'outil mobile en rotation et une pluralité de surfaces de coupe montée sur le corps de l'outil.
L'outil de coupe comprend un moyen de récupération des copeaux entourant et enveloppant les bords de coupe des surfaces de coupe portées par le corps d'outil tournant afin de récupérer les copeaux générés par l'opération d'usinage. Le moyen de récupération comprend une ouverture d'évacuation qui peut être connectée à des moyens d'aspiration pour favoriser l'évacuation des copeaux. La buse assurant l'enveloppement de la fraise est liée à une conduite d'aspiration et est en liaison pivot avec le corps de l'outil, liaison pivot mise en oeuvre par un roulement à billes. En conséquence, le positionnement de la buse par rapport à l'outil est également réalisé dans ce document par une liaison pivot mise en oeuvre par des roulements.

### DESCRIPTION DE L'INVENTION

Partant de cet état de fait, la demanderesse a mené des recherches visant à obvier aux inconvénients de l'art antérieur en proposant une solution technologique permettant d'embarquer un module d'aspiration avec l'outil c'est à dire un dispositif d'aspiration des copeaux produits par une machine-outil d'usinage au moyen d'au moins un outil mis en mouvement par un module porte-outil, le dispositif étant du type de celui comprenant une centrale d'aspiration créant une dépression, l'outil étant composé d'une partie coupante et d'un support d'attachement standard.

Un critère que s'est fixé la demanderesse réside dans la simplicité et le faible coût de la mise en oeuvre de la solution envisagée. En effet, la partie embarquée du module d'aspiration doit être la plus simple possible car son coût est multiplié par le nombre d'outils qu'est susceptible d'accueillir la machine-outil d'usinage. En effet, le choix d'utiliser dans les solutions décrites dans l'art antérieur un ou plusieurs roulements, en dehors du seul coût de ce composant, nécessite la présence de surfaces d'accueil pour ce dernier ainsi que de dispositions par en assurer la mise en position et le maintien en position. Le montage des roulements nécessite notamment des surfaces cylindriques particulières pour former un ajustement précis avec l'arbre et le cylindre auxquels il est lié. La liaison étant réalisée entre l'outil et la buse, le support d'attachement de l'outil doit être spécifique ou faire l'objet d'importantes modifications. Cette mise en oeuvre multipliée par le nombre d'outils est particulièrement lourde.

Le dispositif selon l'invention est défini à la revendication 1.

Ce dispositif propose d'envelopper individuellement chaque outil d'un manchon ou buse imperdable qui se connecte automatiquement sur un sous-ensemble commun fixé sur le module ou la broche porte-outil de la machine-outil, lors de la prise d'outil. Un flux d'air est alors maintenu de l'extrémité de travail de l'outil vers le module porte-outil pour aspirer les effluents créés. En venant en contact avec la pièce à usiner, cette buse assure le confinement de ce flux d'air dans un volume défini par la pièce à usiner, les surfaces extérieures de l'outil et les surfaces intérieures de la buse.

Le module porte-outil peut être constitué par une simple broche porte-outil assurant sa seule mise en mouvement en rotation ou bien par un coulant susceptible de proposer une pluralité de mouvements additionnels.

Ainsi, dans le cadre de la mise en oeuvre du dispositif de l'invention, chaque outil comporte une buse d'aspiration qui suit les mouvements de l'outil non seulement lors des phases d'usinage mais également lors des phases de changement d'outils étant entendu que cette buse ne peut jouer son rôle de module d'aspiration embarqué qu'une fois cette dernière installée sur le module porte-outil et qu'en phase d'usinage. Conformément à l'invention, la buse est positionnée précisément par rapport à l'outil seulement lorsque ce dernier vient s'emmancher sur son module de mise en mouvement. Ce positionnement consiste à laisser un jeu entre les surfaces tournantes (outil et corps de l'outil) et les surfaces fixes (buse). Lorsque l'outil n'est pas installé dans le moyen de mise en mouvement la buse montée "flottante" n'est pas positionnée précisément par rapport à l'outil mais est seulement retenue à ce dernier. Ainsi, le moyen de mise en position et de maintien en position associé au module de mise en mouvement de l'outil a non seulement pour fonction de relier la buse à la centrale d'aspiration comme prévue dans les documents de l'art antérieur mais également de réaliser la fonction de positionnement de la buse montée "flottante" par rapport à l'outil tournant de façon à ne pas gêner cette rotation. En effet, l'absence de cette fonctionnalité associée à l'absence de guidage, rendrait impossible l'opération d'usinage avec une buse venant sporadiquement en contact (par choc) avec l'élément tournant.

Cette caractéristique est en outre particulièrement avantageuse en ce qu'elle prévoit la fixation flottante du moyen d'aspiration au support d'attachement standard supportant chaque outil. La demanderesse s'est orientée vers une solution technologique simplifiant la liaison entre la buse d'aspiration embarquée et l'outil en la montant "flottante" sur l'outil et en reportant la fonction de positionnement nécessaire entre la buse et l'outil dans la liaison entre la buse et le module porte-outil. L'adjectif flottant a ici comme sens de définir ce qui n'est pas attaché fixement et qui a une relative liberté de mouvements. Ainsi, contrairement aux solutions de l'art antérieur qui proposent un guidage en rotation mis en oeuvre par des roulements entre la buse et l'outil, ce qui définit un seul degré de liberté en rotation selon l'axe de rotation de l'outil, la demanderesse propose de ne pas assurer de liaison entre l'outil et la buse tout en limitant l'amplitude des mouvements de la buse par rapport à l'outil. En conséquence, la liaison mise en oeuvre par l'invention entre la buse et l'outil laisse les six degrés de liberté.

Un des soucis de la demanderesse dans la conception du dispositif de l'invention a été la simplicité de cette fixation. En effet, la simplicité des solutions retenues doit garantir leur fiabilité lors de leur utilisation sur machine-outil d'usinage.

Selon une caractéristique particulièrement avantageuse de l'invention, la buse est constituée d'un manchon venant se placer autour de l'outil concentriquement à l'axe de rotation de ce dernier sur son support standard d'attachement. Cette buse est ménagée intérieurement d'une rainure dans laquelle vient se loger un anneau élastique coopérant avec une rainure ménagée à cet effet sur le support d'attachement standard de l'outil.

La fixation envisagée par la demanderesse ne requiert pas le changement des supports standards d'outils déjà existants mais simplement une adaptation facile à mettre en oeuvre puisqu'il s'agit de réaliser une rainure susceptible d'accueillir un anneau élastique de type "circlips". De plus, le montage en lui-même de la buse autour de l'outil ne requiert pas d'installation particulièrement lourde car il nécessite simplement la mise en oeuvre d'un circlips pour autoriser la pénétration du support d'attachement standard à l'intérieur de la buse et son relâchement une fois la surface intérieure du "circlips" se trouvant à l'intérieur de la rainure prévue à cet effet dans le support. En outre, la réalisation d'une telle rainure ne nécessite pas la modification de surfaces fonctionnelles déjà exploitées.

La simplicité de ce type de fixation et de montage a pour avantage de présenter un coût attractif et de ne pas créer un volume encombrant autour de l'outil, volume qui pourrait limiter les mouvements de l'outil à l'intérieur du poste d'usinage. De plus, une telle solution évite une trop grande addition de masse à mettre en mouvement au niveau de l'outil. En effet, le roulement de l'art antérieur et les pièces nécessitées par son installation, définissaient un volume particulièrement important autour de l'outil, volume ou encombrement qui rendait difficile le stockage des outils dans les moyens de stockage classiques.

Un autre avantage de la réutilisation du support d'attachement de l'outil, réside donc dans la possibilité de conserver les interfaces existants tels celui utilisé entre l'outil et le module porte-outil ou celui utilisé entre l'outil et l'éventuel module de stockage.

Selon une autre caractéristique particulièrement avantageuse de l'invention, le dispositif est équipé d'un moyen d'indexage angulaire permettant à la buse de présenter une position angulaire adéquate pour son installation dans son module porte-outil afin que la partie embarquée avec l'outil du dispositif d'aspiration lui-même présente une orientation angulaire adéquate pour autoriser sa mise en position et son maintien en position par rapport au module porte-outil.

La demanderesse a également mené des recherches afin d'optimiser la mise en place de la partie embarquée individuelle à chaque outil du dispositif d'aspiration sur la partie commune fixée au module porte-outil. Ainsi, selon une caractéristique particulièrement avantageuse de l'invention, ladite buse solidaire de l'outil est mise en place sur le module porte-outil lors du mouvement relatif de l'outil par rapport au module porte-outil correspondant à celui connu pour la prise de l'outil dans ledit module porte-outil sans actionneur supplémentaire. En conséquence, la mise en position ou le maintien en position du dispositif d'aspiration de l'invention ne nécessite pas d'actions ou d'actionneurs supplémentaires par rapport à ceux qui existent déjà dans le cadre d'un changement d'outil.

Les concepts fondamentaux de l'invention viennent d'être exposés ci-dessus dans leur forme la plus élémentaire. D'autres détails et caractéristiques ressortiront plus clairement à la lecture de la description en regard des dessins annexés, qui présentent à titre d'exemple non limitatif, un mode de réalisation d'un dispositif d'aspiration conforme à l'invention.

### BRÈVE DESCRIPTION DES DESSINS

La figure 1 est un dessin schématique en vue en coupe en perspective d'un mode de réalisation du dispositif de l'invention,
La figure 2 est un dessin schématique en vue en perspective d'un ensemble classique regroupant un outil et un support d'attachement standard d'outil aménagé pour accueillir la partie embarquée de l'invention,
La figure 3 est un dessin schématique en vue en coupe de la seule partie embarquée du dispositif de l'invention,
La figure 4 est un dessin schématique en vue en perspective de l'opération de montage sur le module porte-outil de l'outil équipé du dispositif de l'invention et en prise avec un moyen de préhension,
La figure 5 est un dessin schématique en vue de côté du mode de réalisation du dispositif de l'invention
Les figures 6a, 6b et 6c sont des dessins schématiques en vue en coupe illustrant les différentes étapes de montage de l'outil et de la partie embarquée du dispositif sur le module porte-outil.

### DESCRIPTION DES MODES DE RÉALISATION PRÉFÉRÉS

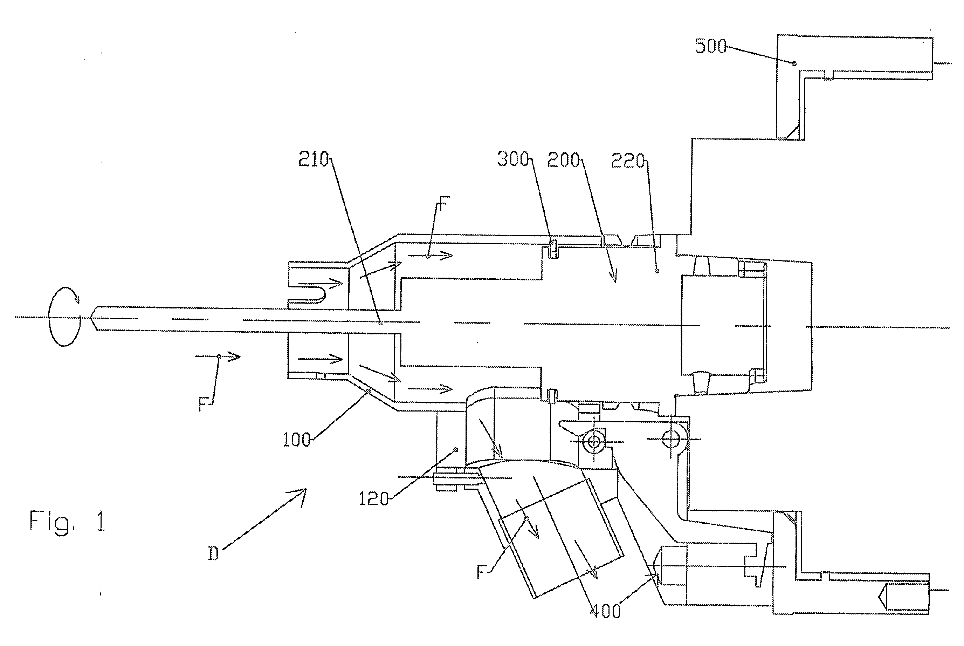

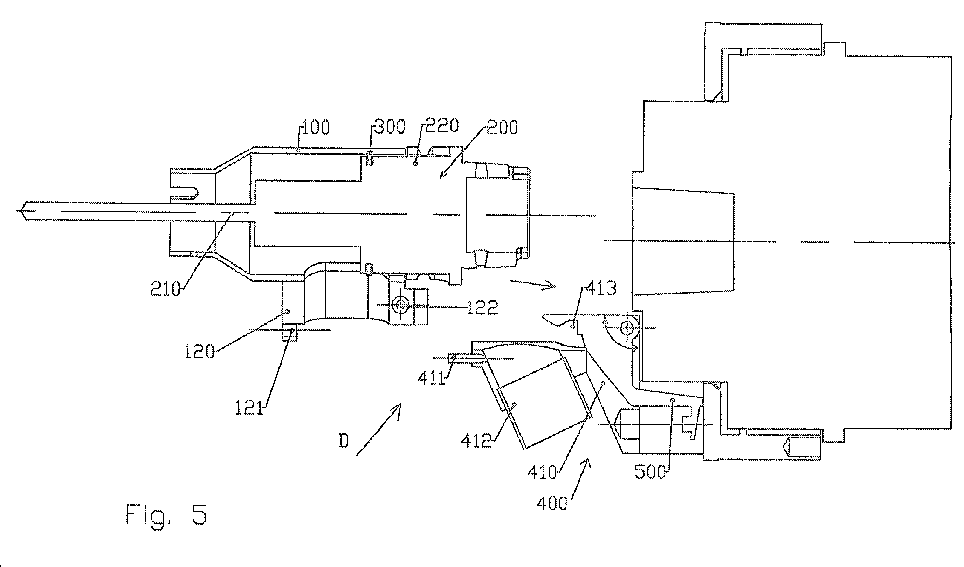

Tel qu'illustré sur les dessins des figures 1, 3, 4, 5 et 6, le dispositif d'aspiration des copeaux référencé D dans son ensemble est du type de celui comprenant une centrale d'aspiration non illustrée créant une dépression et reliée à une buse d'aspiration 100 venant au plus prés de l'extrémité de travail d'un outil 200 mis en mouvement par un module porte-outil d'une machine-outil non illustrée, l'outil 200 étant composé d'une partie coupante 210 fixée à un support d'attachement standard 220.

Conformément à l'invention, la buse d'aspiration 100 vient se fixer de façon flottante au support d'attachement standard 220 de l'outil 200 de façon à créer une dépression autour de l'outil 200 tout en autorisant la rotation de ce dernier. Le mouvement de l'air est illustré par les flèches F. Ainsi, une fois l'outil 200 et la buse 100, partie embarquée du dispositif d'aspiration D mis en position, un jeu fonctionnel est présent entre la surface intérieure de la buse 100 qui est fixe et les surfaces extérieures de l'outil 200 et du support d'emmanchement 220 qui sont mobiles selon un mouvement de rotation autour de l'axe de l'outil 200.

En effet, le maintien d'une côte fixe entre l'outil et la buse n'est nécessaire que lors de l'opération d'usinage, aussi l'invention prévoit le positionnement précis de la buse par rapport à l'outil lorsque ce dernier s'installe dans le module porte-outil. La solution technologique proposée par la demanderesse assure donc la fonction de positionnement précis entre la buse et l'outil lorsque ces deux derniers sont installés sur le module de mise en mouvement de l'outil. L'absence de guidage réduit le coût, l'encombrement, la masse des éléments à mettre en mouvement et le nombre de modifications à réaliser sur les installations existantes.

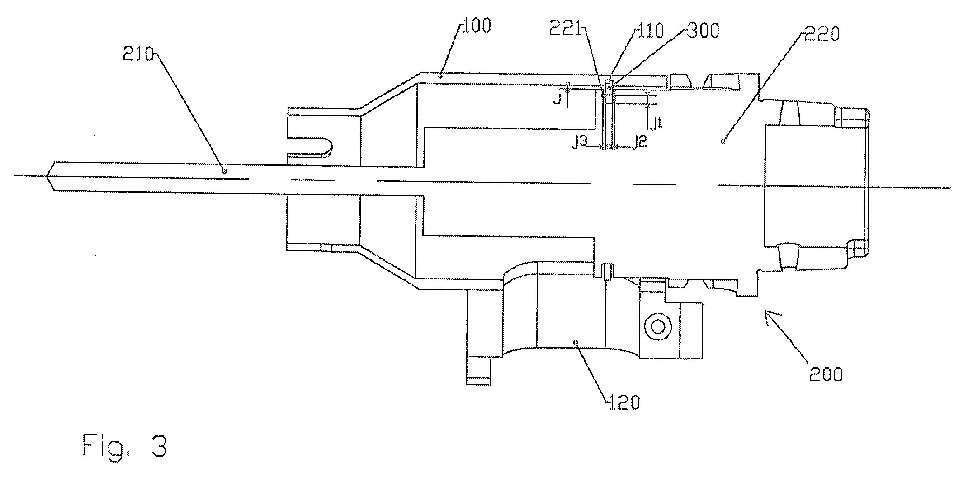

Comme illustrée plus en détails sur le dessin de la figure 3, la buse 100 est constituée dans sa partie arrière d'un manchon venant se placer concentriquement à l'axe de rotation de l'outil 200 sur son support standard d'attachement 220.

Selon une caractéristique non illustrée, ladite buse 100 se prolonge au niveau de sa partie avant d'un conduit d'une longueur adaptée à la longueur de l'outil 200 venant en contact avec la pièce à usiner non illustrée et dont la longueur est susceptible de varier en fonction de la course axiale de l'outil 200.

En outre, la buse 100 est ménagée intérieurement d'une première rainure 110 au niveau du manchon dans laquelle vient se loger un anneau élastique 300 de type "circlips" coopérant avec une deuxième rainure 221 ménagée à cet effet sur le support d'attachement standard 220 de l'outil 200.

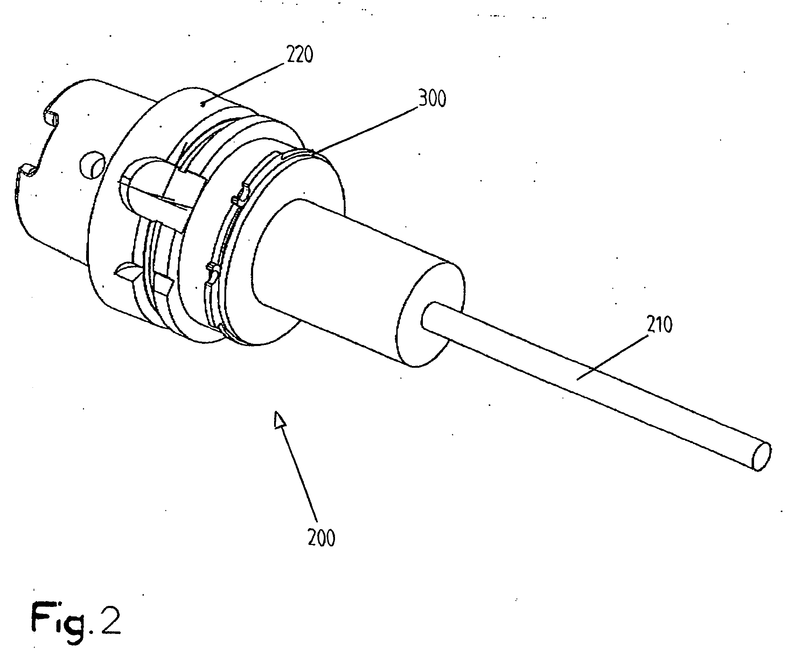

Cette rainure 221 et l'implantation de l'anneau élastique 300 à l'intérieur de cette dernière apparaissent en vue extérieure sur le dessin de la figure 2. Selon le mode de réalisation illustré, le support d'attachement standard 220 est du type HSK et comporte sur sa partie avant, une surface cylindrique dans laquelle a été ménagée la rainure 221. La solution de fixation de la buse non seulement autorise l'utilisation des dispositifs de support d'outil déjà existants mais également ne nécessite qu'un aménagement minimal desdits dispositifs déjà existants. Selon un mode de réalisation préféré, l'anneau élastique 300 est du type de ceux restant ouverts au repos.

Le montage en lui-même est particulièrement simple.

Il suffit de glisser l'outil 200 et son support d'attachement 220 avec l'anneau élastique 300 maintenu en position fermée dans le manchon constituant la partie arrière de la buse 100 jusqu'à la mise en place du circlips 300 dans la rainure correspondante du manchon dans laquelle il reprend sa position de repos.

Selon une caractéristique particulièrement avantageuse de l'invention, l'anneau élastique 300 est monté avec jeu sur la rainure 221 ménagée sur le support d'attachement d'outil 220 de sorte qu'une fois mis en place dans la rainure 110 de la buse 100 et que la buse est associée à la partie fixe du dispositif D, l'anneau ne soit pas en contact avec le support d'attachement d'outil 220. Ainsi, comme illustré à la figure 3, une fois mis en place sur la partie fixe solidaire du module porte outil, l'anneau élastique 300 ne se trouve pas en contact avec ladite rainure 221 en maintenant un jeu représenté par les repères J1, J2 et J3.

En effet, la fonction de ce montage n'est pas de réaliser une fixation serrée ou un guidage en rotation entre la buse 100 et l'outil 200 mais d'empêcher le dégagement du module d'attachement standard 220 de la buse 100 tout en autorisant la rotation de l'outil 200 lorsque ce dernier est mis en mouvement par sa broche.

Comme illustrée, la simplicité de ce montage a pour avantage de ne pas créer de volume trop encombrant autour de l'outil et donc dans le poste d'usinage. De plus, cette simplicité de mise en oeuvre garantit la fiabilité d'une telle solution technologique. Ainsi, selon le mode de réalisation illustré, la buse ne présente pas une épaisseur allant au delà du diamètre maximal du support d'attachement d'outil HSK illustré. En conséquence, l'ensemble formé par l'outil associé à la buse requiert une gestion d'encombrement dans les phases d'usinage, de changement d'outil ou de stockage de l'outil équivalente à celle nécessaire à un outil n'embarquant pas de dispositif d'aspiration.

Comme expliqué plus haut, le dispositif D se décompose en une première partie dite embarquée composée d'une pluralité de buses 100 individuelles associées à chaque outil 200 et une deuxième partie fixe par rapport au module porte-outil qui peut être composé d'un coulant porte-broche assurant la mise en mouvement non seulement en rotation de l'outil mais également éventuellement en translation selon les axes classiques X, Y et Z.

Plus précisément, ladite buse 100 solidaire des mouvements de l'outil 200 vient se relier avec l'outil 200, au module de mise en mouvement de ce dernier qui comporte un moyen 400 de mise en position et un moyen de maintien en position de cette dernière ayant pour fonction de la lier à la centrale d'aspiration non illustrée et de la maintenir dans une position telle qu'elle ne gêne pas la rotation de l'outil 200.

Selon une caractéristique particulièrement avantageuse de l'invention, ladite buse 100 comprend une extrémité de conduit 120 venant coopérer, une fois l'outil 200 mis en place dans son module de mise en mouvement 500, avec une extrémité d'un autre conduit liée au moyen de mise en position et de maintien en position.

Selon une autre caractéristique particulièrement avantageuse de l'invention, afin de mettre en oeuvre la mise en position et le maintien en position de la buse 100, le moyen de fixation 400 de l'outil 200 qui accueille également la buse 100, comporte un corps principal 410 qui assure la liaison de la partie fixe du dispositif D avec le module porte-outil 500.

Ce corps principal est équipé d'un adaptateur commun fixe qui se place en vis-à-vis d'un adaptateur embarqué correspondant de la buse 100, lors de la prise de l'outil 200 par le module porte-outil 500, cet adaptateur commun étant également équipé d'une extrémité 412 du conduit destiné à se connecter à la centrale d'aspiration non illustrée.

Cet adaptateur comprend un pion de centrage 411 associé à un ergot de blocage 413 qui vont assurer le positionnement et le maintien en position de la buse 100 dans la position adéquate autour de l'outil 200 lorsqu'il est en position dans le module porte-outil 500 de façon à ce qu'un jeu soit présent entre la surface intérieure de la buse 100 qui reste fixe par rapport au module support d'outil et la surface extérieure du support d'attachement de l'outil 220 qui est en rotation pendant l'opération d'usinage. De plus, les jeux sont calculés de façon à ce que le "circlips" ne vienne pas en contact avec le support d'attachement d'outil à l'intérieur de la rainure.

Ces éléments fixes sont associés sur la partie embarquée à un trou de centrage 121 destiné à recevoir le pion 411 et à un galet de guidage/blocage 122 qui reprend l'ergot 413.

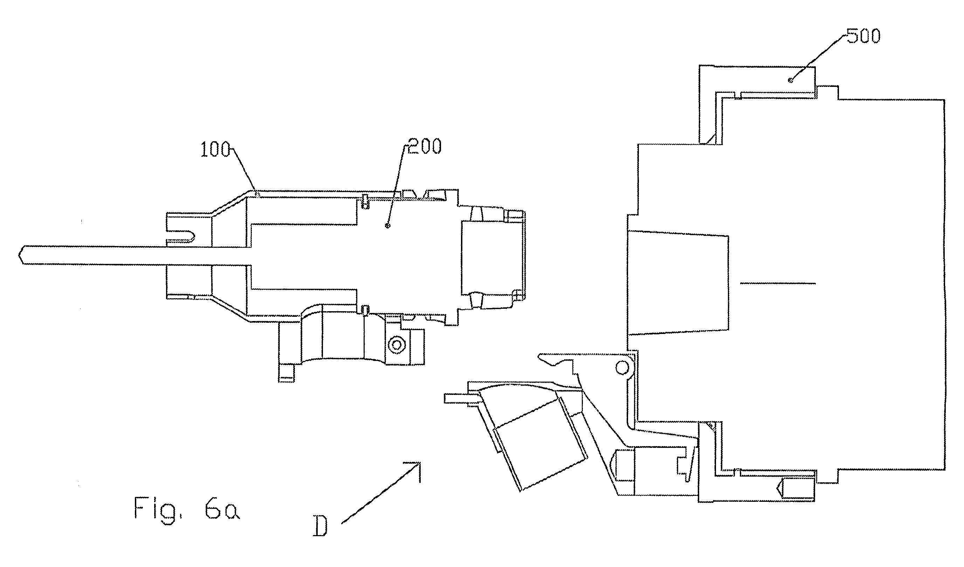

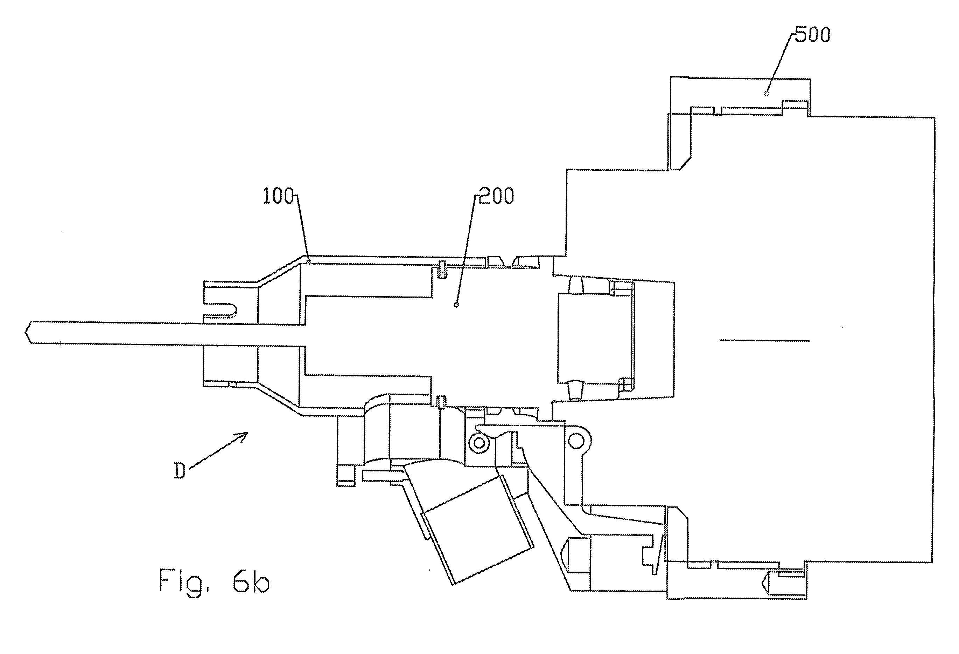

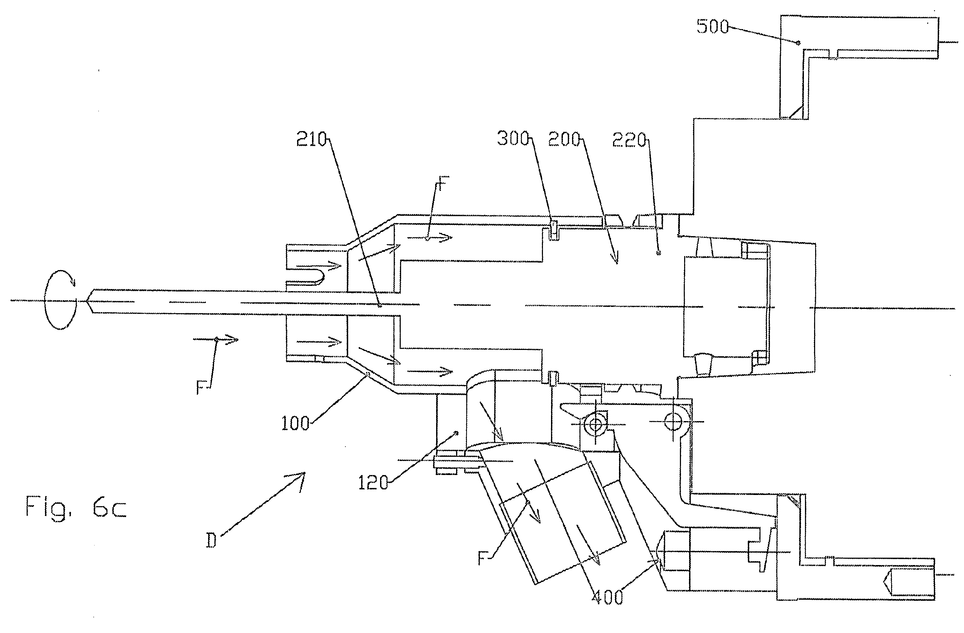

Les figures 6a, 6b, et 6c illustrent la mise en place de l'outil 200 associé à sa buse 100 sur le module porte outil 500. Comme illustrée, l'extrémité de conduite 120 embarquée avec la buse 100 vient correspondre avec l'extrémité de conduite fixe 412 reliée à la centrale d'aspiration non illustrée de façon à ce qu'elle crée une continuité dans la conduite d'aspiration.

Le choix de ces moyens de mise en position et de maintien en position permet au dispositif d'aspiration de ne pas nécessiter d'actionneur supplémentaire ni de temps de cycle supplémentaire pour son installation. En effet, l'installation du dispositif d'aspiration, c'est à dire la réunion de la partie embarquée avec la partie fixe se réalise dans la même opération et donc dans le même temps de cycle que l'opération de prise d'outil par le module porte-pièce.

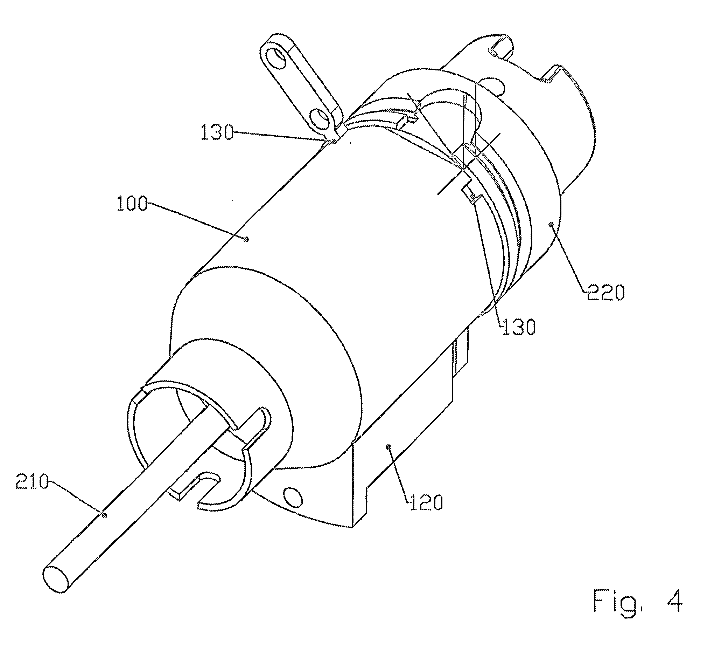

Comme illustrée sur le dessin de la figure 4, la dite buse 100 comporte extérieurement des encoches 130 venant coopérer avec des moyens d'accueil ou de préhension des outils 200 lors des phases de changement d'outil et de stockage afin d'orienter correctement l'extrémité de conduit 120 qu'elle comporte.

Selon un mode de réalisation particulièrement avantageux, les extrémités du "circlips" 300 sont accessibles au travers de l'ouverture formée par l'extrémité 120 de conduit embarquée par l'ensemble formé de l'outil 200 et de la buse 100. Il suffit donc de rapprocher les extrémités du "circlips" 300 pour désengager ce dernier de la rainure 110 ménagée dans la surface intérieure de la buse 100 et autoriser le retrait du support d'attachement d'outil 220 de la buse 100. Ainsi, non seulement le montage mais également le démontage sont des opérations facilitées par la solution technologique mise en oeuvre par le dispositif de l'invention.

On comprend que le dispositif d'aspiration qui vient d'être ci-dessus décrit et représenté, l'a été en vue d'une divulgation plutôt que d'une limitation. Bien entendu, divers aménagements, modifications et améliorations pourront être apportés à l'exemple ci-dessus, sans pour autant sortir du cadre de l'invention telle que définie dans les revendications. Ainsi par exemple, bien que particulièrement adapté à des opérations d'usinage faisant intervenir la micropulvérisation, le dispositif de l'invention pourra être utilisé dans le cadre d'opérations d'usinage faisant intervenir des moyens d'évacuation plus classiques.

## Revendications

1. Dispositif (D) d'aspiration des copeaux produits par une machine-outil d'usinage au moyen d'au moins un outil (200) mis en mouvement par un module porte-outil,
- le dispositif comprenant une centrale d'aspiration créant une dépression,
- l'outil (200) étant composé d'une partie coupante (210) et d'un support d'attachement standard (220), **CARACTÉRISÉ PAR LE FAIT Qu'**il comporte une buse d'aspiration (100) qui, vient se lier
- d'une part de façon flottante au support d'attachement standard (220) de l'outil (200) de façon à créer une dépression autour de l'outil (200) jusqu'à son extrémité,
- d'autre part de façon fixe et précise au module porte-outil de façon à positionner la buse (100) par rapport à l'outil (200) en créant un jeu entre ces derniers et autoriser ainsi la rotation de l'outil par rapport à la buse.

2. Dispositif (D) selon la revendication 1, **CARACTÉRISÉ PAR LE FAIT QUE** la buse (100) est constituée sur sa partie arrière d'un manchon venant se placer concentriquement à l'axe de rotation de l'outil (200) sur son support standard d'attachement (220).

3. Dispositif (D) selon la revendication 1, **CARACTÉRISÉ PAR LE FAIT QUE** la buse (100) est ménagée intérieurement d'une première rainure (110) dans laquelle vient se loger un anneau élastique (300) coopérant avec une deuxième rainure (221) ménagée à cet effet sur le support d'attachement standard (220) de l'outil (200).

4. Dispositif (D) selon la revendication 3, **CARACTÉRISÉ PAR LE FAIT QUE** l'anneau élastique (300) est monté avec jeu sur la rainure (221) ménagée sur le support d'attachement d'outil (220) de sorte qu'une fois mis en place dans la rainure (110) de la buse (100) et que la buse (100) est associée à la partie fixe du dispositif, l'anneau (300) ne soit pas en contact avec le support d'attachement d'outil (220).

5. Dispositif (D) selon la revendication 1, **CARACTÉRISÉ PAR LE FAIT QUE** ladite buse (100) solidaire de l'outil (200) vient se relier avec ce dernier, au module de mise en mouvement de l'outil qui comporte un moyen de mise en position et un moyen de maintien en position (400) de la buse (100) ayant pour fonction de la lier à la centrale d'aspiration et de la maintenir dans une position telle qu'elle ne gêne pas la rotation de l'outil.

6. Dispositif selon la revendication 1, **CARACTÉRISÉ PAR LE FAIT QUE** ladite buse (100) solidaire de l'outil (200) est mise en place sur le module porte-outil lors du mouvement relatif de l'outil par rapport au module porte-outil correspondant à celui connu pour la prise de l'outil dans ledit module porte-outil sans actionneur supplémentaire.

7. Dispositif (D) selon la revendication 5, **CARACTÉRISÉ PAR LE FAIT QUE** ladite buse (100) comprend une extrémité de conduit (120) venant coopérer, une fois l'outil (200) mis en place dans son module de mise en mouvement, avec une extrémité d'un autre conduit (412) liée au moyen de mise en position et de maintien en position (400).

8. Dispositif (D) selon la revendication 1, **CARACTÉRISÉ PAR LE FAIT QUE** le module porte-outil qui accueille également la buse, est équipé d'un adaptateur commun fixe qui se place en vis à vis d'un adaptateur embarqué correspondant de la buse (100) lors de la prise de l'outil (200) par le module porte-outil, cet adaptateur fixe étant équipé de l'extrémité (412) du conduit destiné à se connecter à la centrale d'aspiration

9. Dispositif (D) selon la revendication 8, **CARACTÉRISÉ PAR LE FAIT QUE** l'adaptateur fixe se compose d'un pion de centrage (411) associé à un ergot de blocage (413) qui vont assurer le positionnement et le maintien en position de la buse (100) dans la position adéquate autour de l'outil (200) lorsqu'il est en position dans le module porte-outil, ces éléments venant s'associer sur la partie embarquée à un adaptateur embarqué composé d'un trou (121) de centrage destiné à recevoir le pion (411) et d'un galet de guidage blocage (122) qui reprend l'ergot (413).

10. Dispositif selon la revendication 1, **CARACTÉRISÉ PAR LE FAIT QUE** la dite buse (100) comporte extérieurement des encoches (130) venant coopérer avec des moyens d'accueil ou de préhension des outils (200) lors des phases de changement d'outil (200) afin d'orienter correctement l'extrémité de conduit qu'elle emporte.

## Claims

1. A suction device (D) for shaving products by a machining machine tool by means of at least a tool (200) actuated by a tool holder module,
- the device including a suction unit generating a low pressure,
- the tool (200) being composed of a cutting part (210) and a standard attachment support (220), **characterized by** the fact that it includes a suction conduit (100) that is coupled
- on the one hand, in a floating manner to the standard attachment support (220) of the tool (200) in a manner to generate a low pressure around the tool (200) up to its end, and
- on the other hand, in a manner fixed and precise, to the tool holder module in a manner to position the conduit (100) with respect to the tool (200) by creating a play between the conduit (100) and the tool (200) and to thus enable the rotation of the tool with respect to the conduit.

2. The device (D) according to claim 1, **characterized by** the fact that conduit (100) is constituted on its rear part by a sleeve being placed concentrically at the rotational axis of the tool (200) on its standard attachment support (220).

3. The device (D) according to claim 1, **characterized by** the fact that conduit (100) is interiorly arranged with a first groove (110) in which an elastic ring (300) is placed, cooperating with a second groove (221) arranged to this effect on the standard attachment support (220) of the tool (200).

4. The device (D) according to claim 3, **characterized by** the fact that the elastic ring (300) is mounted with play on the groove (221) arranged on the attachment support (220) of the tool so that once set in place in the groove (110) of the conduit (100) and that the conduit (100) is associated with a fixed part of the device, the ring (300) is not in contact with the attachment support (220) of the tool.

5. The device (D) according to claim 1, **characterized by** the fact that the aforementioned conduit (100) integral with the tool (200) is coupled to the latter, by an actuation module of the tool including a means of placing in position and a means of maintaining in position (400) of the conduit (100) having the function of coupling it to the suction unit and to maintain it in a position such that it does not interfere with the rotation of the tool.

6. The device according to claim 1, **characterized by** the fact that the aforementioned conduit (100) integral with the tool (200) is placed in place on the tool holder module when the relative movement of the tool with respect to the tool holder module corresponding to that known for the intake of the tool into the aforementioned tool holder module without supplemental action.

7. The device (D) according to claim 5, **characterized by** the fact that the aforementioned conduit (100) includes a conduit end (120) cooperating, once the tool (200) is set in place in its actuation module, with an end of another conduit (412) coupled to a means of setting in position and maintaining in position (400).

8. The device (D) according to claim 1, **characterized by** the fact that the tool holder module that also receives the conduit, is equipped with a common fixed adapter that is placed opposing a corresponding incorporated adapter for the conduit (100) during the taking of the tool (200) by the tool holder module, this fixed adapter being equipped with the end (412) of the conduit intended to be connected to the suction unit.

9. The device (D) according to claim 8, **characterized by** the fact that the fixed adapter is composed of a centering slug (411) coupled to a blocking spur (413) that provides the positioning and maintenance in position of the conduit (100) in the appropriate position around the tool (200) when it is in position in the tool holder module, these elements being coupled on the incorporated part with an incorporated adapter composed of a centering hold (121) intended to receive the plug (411) and of a guiding blocking roller (122) that retakes the spur (413).

10. The device according to claim 1, **characterized by** the fact that the aforementioned conduit (100) exteriorly includes notches (130) cooperating with the means of receiving or of gripping of the tools (200) during the phases of changing of the tool (200) in order to correctly orient the end of the conduit that it includes.

## Patentansprüche

1. Vorrichtung (D) zum Ansaugen der Späne, die durch eine Bearbeitungs-Werkzeugmaschine erzeugt werden, mit Hilfe von zumindest einem Werkzeug (200), das durch ein Werkzeugträgermodul in Bewegung gesetzt wird,
- wobei die Vorrichtung eine Ansaugzentrale, die einen Unterdruck erzeugt, umfasst,
- wobei sich das Werkzeug (200) zusammensetzt aus einem schneidenden Teil (210) und einem Standardanschlussträger (220), **dadurch gekennzeichnet, dass** sie eine Ansaugdüse (100) aufweist, die sich verbindet
- einerseits auf treibende Art und Weise mit dem Standardanschlussträger (220) des Werkzeuges (200), so dass ein Unterdruck um das Werkzeug (200) herum bis zu seinem Ende erzeugt wird,
- andererseits auf feste und präzise Art und Weise mit dem Werkzeugträgermodul, so dass die Düse (100) im Verhältnis zum Werkzeug (200) positioniert wird, wobei ein Spiel zwischen diesen letztgenannten erzeugt wird und somit die Drehung des Werkzeuges im Verhältnis zur Düse möglich gemacht wird.

2. Vorrichtung (D) nach Anspruch 1, **dadurch gekennzeichnet, dass** sich die Düse (100) an ihrem hinteren Teil zusammensetzt aus einer Muffe, die sich konzentrisch zur Drehachse des Werkzeuges (200) auf seinem Standardanschlussträger (220) platziert.

3. Vorrichtung (D) nach Anspruch 1, **dadurch gekennzeichnet, dass** die Düse (100) innen mit einer ersten Nut (110) versehen ist, in der ein elastischer (300) Ring lagert, der zusammen mit einer zweiten Nut (221) wirkt, die zu diesem Zwecke auf dem Standardanschlussträger (220) des Werkzeuges (200) vorgesehen ist.

4. Vorrichtung (D) nach Anspruch 3, **dadurch gekennzeichnet, dass** der elastische Ring (300) derart mit Spiel auf der Nut (221), die auf dem Anschlussträger des Werkzeuges (220) vorgesehen ist, montiert ist, dass, sobald er in der Nut (110) der Düse (100) eingerichtet ist und sobald die Düse (100) dem festen Teil der Vorrichtung zugeordnet ist, sich der Ring (300) nicht mehr in Kontakt mit dem Anschlussträger des Werkzeuges (220) befindet.

5. Vorrichtung (D) nach Anspruch 1, **dadurch gekennzeichnet, dass** die genannte Düse (100), die fest mit dem Werkzeug (200) verbunden ist, sich mit diesem letztgenannten verbindet, am Modul zum Inbewegungsetzen des Werkzeuges umfassend ein Positioniermittel und ein Positionshaltemittel (400) der Düse (100) mit der Funktion, sie mit der Ansaugzentrale zu verbinden und sie in einer derartigen Position zu halten, dass sie die Drehung des Werkzeuges nicht behindert.

6. Vorrichtung nach Anspruch 1, **dadurch gekennzeichnet, dass** die genannte Düse (100), die fest mit dem Werkzeug (200) verbunden ist, auf dem Werkzeugträgermodul eingerichtet wird bei der Relativbewegung des Werkzeuges im Verhältnis zum Werkzeugträgermodul, das demjenigen entspricht, das für die Aufnahme des Werkzeuges in dem genannten Werkzeugträgermodul ohne zusätzlichem Wirkglied bekannt ist.

7. Vorrichtung (D) nach Anspruch 5, **dadurch gekennzeichnet, dass** die genannte Düse (100) ein Rohrende (120) umfasst, das, sobald das Werkzeug (200) in seinem Modul zum Inbewegungsetzen eingerichtet ist, mit einem Ende eines anderen Rohres (412), das durch das Positionier- und Positionshaltemittel (400) verbunden ist, zusammenwirkt.

8. Vorrichtung (D) nach Anspruch 1, **dadurch gekennzeichnet, dass** das Werkzeugträgermodul, das ebenfalls die Düse aufnimmt, ausgerüstet ist mit einem gemeinsamen festen Adapter, der gegenüber einem entsprechenden mitgeführten Adapter der Düse (100) platziert wird, und dies bei der Aufnahme des Werkzeuges (200) durch das Werkzeugträgermodul, wobei dieser feste Adapter mit dem Ende des Rohres (412) ausgerüstet ist, das dazu vorgesehen ist, sich an die Ansaugzentrale anzuschließen.

9. Vorrichtung (D) nach Anspruch 8, **dadurch gekennzeichnet, dass** sich der feste Adapter zusammensetzt aus einem Zentrierstift (411), der einem Blockierstift (413) zugeordnet ist, die für die Positionierung und das und Positionshalten der Düse (100) in der geeigneten Position um das Werkzeug (200) herum sorgen, wenn es im Werkzeugträgermodul positioniert ist, wobei sich diese Elemente auf dem mitgeführten Teil verbinden mit einem mitgeführten Adapter bestehend aus einem Zentrierloch (121) für die Aufnahme des Stiftes (411) und einer Blockier-/Leitrolle (122), die den Stift (413) wieder aufnimmt.

10. Vorrichtung nach Anspruch 1, **dadurch gekennzeichnet, dass** die genannte Düse (100) außen Kerben (130) aufweist, die mit Aufnahme- oder Greifmitteln des Werkzeuges (200) zusammenwirken, und dies während der Auswechselphasen des Werkzeuges (200), um das von ihr mitgenommene Rohrende richtig zu orientieren.
